**Europäisches Patentamt**

**European Patent Office**

**Office européen des brevets**

(19)

(11) Veröffentlichungsnummer: **0 345 414 B1**

(12) **EUROPÄISCHE PATENTSCHRIFT**

(45) Veröffentlichungstag der Patentschrift:
06.11.91 Patentblatt 91/45

(51) Int. Cl.$^5$: **G01B 11/26**

(21) Anmeldenummer: 89101597.6

(22) Anmeldetag: 31.01.89

(54) **Lichtelektrische Winkelmesseinrichtung.**

(30) Priorität: 16.04.88 DE 3812804
28.05.88 DE 3818218

(43) Veröffentlichungstag der Anmeldung:
13.12.89 Patentblatt 89/50

(45) Bekanntmachung des Hinweises auf die
Patenterteilung:
06.11.91 Patentblatt 91/45

(84) Benannte Vertragsstaaten:
AT CH DE ES FR GB IT LI NL SE

(56) Entgegenhaltungen:
EP-A- 0 220 757
EP-B- 0 096 448
FR-A- 1 592 120
US-A- 3 524 067

(73) Patentinhaber: **Dr. Johannes Heidenhain
GmbH**
**Dr.-Johannes-Heidenhain-Strasse 5 Postfach
1260**
**W-8225 Traunreut (DE)**

(72) Erfinder: **Meyer, Hermann, Dipl.-Ing.(FH)**
**Geislerweg 10**
**W-8230 Weissbach (DE)**
Erfinder: **Ernst, Alfons, Dipl.-Ing.**
**Traunring 62**
**W-8225 Traunreut (DE)**

## Beschreibung

Die Erfindung betrifft eine lichtelektrische Winkelmeßeinrichtung gemäß dem Oberbegriff des Anspruchs 1 oder 2.

Derartige absolute oder inkrementale Winkelmeßeinrichtungen werden insbesondere bei Bearbeitungsmaschinen zur Messung der Relativlage eines Werkzeugs bezüglich eines zu bearbeitenden Werkstücks eingesetzt.

Bei Winkelmeßeinrichtungen wird die Winkelteilung eines drehbaren Teilungsträgers, der mit dem drehbaren Objekt verbunden ist, von einer am stationären Objekt befestigten Abtasteinheit zur Erzeugung von Meßwerten für die relative Winkellage des drehbaren Objekts zum stationären Objekt abgetastet.

Diese Winkelteilungen können auf zweierlei Weise ausgebildet sein : zum einen ist die Winkelteilung auf der Oberfläche einer kreisförmigen Teilscheibe an deren Peripherie in Form von radialen Teilungsstrichen ausgebildet ; zum anderen ist die Winkelteilung auf der Mantelfläche eines zylinderförmigen Teilungsträgers in Form von parallelen Teilungsstrichen aufgebracht.

In der EP-PS 0096448 ist eine lichtelektrische Winkelmeßeinrichtung beschrieben, bei der eine Abtasteinheit im Auflicht eine radiale Winkelteilung auf der Oberfläche einer kreisförmigen Teilscheibe an deren Peripherie abtastet. In dieser Abtasteinheit fallen die von einer Lichtquelle ausgehenden Lichtstrahlen über einen Teilerspiegel, einen Kondensor und ein optisch abbildendes Element, das eine Zylinderlinse, deren Brennlinie mit der Drehachse der Teilscheibe zusammenfällt, und einen konischen Spiegel enthält, auf die radiale Winkelteilung der Teilscheibe und werden von der radialen Winkelteilung durch die vorgenannten Elemente und ein Objektiv auf eine parallele Abtastteilung einer lichtelektrischen Sensoreinheit reflektiert. Das optisch abbildende Element aus Zylinderlinse und konischem Spiegel dient bei dieser aufwendig aufgebauten Winkelmeßeinrichtung zur koinzidenten Abbildung der radialen Winkelteilung auf die parallele Abtastteilung.

Aus der Druckschrift der Fa. DR. JOHANNES HEIDENHAIN Gmbh "Winkelmeßgerät LIDA 360", Juli 1986 ist eine lichtelektrische Winkelmeßeinrichtung bekannt, bei der eine Winkelteilung in Form eines Stahlbandes auf der äußeren Mantelfläche eines zylinderförmigen Teilungsträgers befestigt ist und von einer Abtasteinheit im Auflicht abgetastet wird.

Eine solche lichtelektrische Abtasteinheit enthält beispielsweise eine Lichtquelle, einen Kondensor, einen Teilerspiegel, eine ebene Abtastplatte mit einer Abtastteilung sowie ein Photoelement. Die von der Lichtquelle ausgehenden Lichtstrahlen werden vom Kondensor parallel gerichtet, durchsetzen nach Passieren des Teilerspiegels senkrecht die Abtastteilung der ebenen Abtastplatte, werden von der Winkelteilung auf der äußeren Mantelfläche des zylinderförmigen Teilungsträgers durch die Abtastteilung der Abtastplatte hindurch auf den Teilerspiegel reflektiert und fallen nach der Umlenkung durch den Teilerspiegel auf das Photoelement. Die ebene Abtastplatte ist senkrecht zur optischen Achse des Strahlenganges und parallel zur Mantellinie der Mantelfläche des Teilungsträgers in einem bestimmten Abstand angeordnet. Wegen der Krümmung der Mantelfläche des Teilungsträgers werden nur die Lichtstrahlen in der Mittelebene durch die optische Achse des Strahlengangs und durch die Drehachse des Teilungsträgers von der Winkelteilung des Teilungsträgers senkrecht durch die Abtastteilung der Abtastplatte reflektiert. Die außerhalb dieser Mittelebene parallel zu dieser Ebene auf die Winkelteilung des Teilungsträgers auffallenden parallelen Lichtstrahlen werden wegen dieser Krümmung der Mantelfläche des Teilungsträgers unter einem entsprechenden Reflexionswinkel reflektiert und durchsetzen somit die Abtastteilung der Abtastplatte nicht mehr senkrecht. Diese zunehmende Divergenz der reflektierten Lichtstrahlen mit zunehmendem Abstand beidseitig der Mittelebene beeinflußt aber nachteilig die Signalgüte des vom Photoelement erzeugten periodischen Abtastsignals, so daß die daraus gewonnenen Meßwerte für die relative Winkellage der beiden Objekte Meßungenauigkeiten aufweisen können.

Eine Behebung dieser Meßungenauigkeiten kann durch eine Verkleinerung der Krümmung der Winkelteilung (Vergrößerung des Radius des Teilungsträgers), durch eine Verringerung des Abstandes der Abtastteilung der Abtastplatte von der Winkelteilung auf der Mantelfläche des Teilungsträgers und durch eine Reduzierung der Länge der Abtastteilung senkrecht zur Mittelebene erfolgen. Diesen drei Maßnahmen sind jedoch Grenzen gesetzt. Der Radius des Teilungsträgers ist durch den Anwendungszweck vorgegeben und der Abstand der Abtastteilung von der Winkelteilung läßt sich aus abtastungstechnischen Gründen nicht beliebig verkleinern ; die Länge der Abtastteilung darf ein gewisses Maß nicht unterschreiten, da sonst die maximale Amplitude des vom Photoelement erzeugten Abtastsignals zu einer einwandfreien Bildung der Meßwerte zu gering wird.

Der Erfindung liegt die Aufgabe zugrunde, bei einer lichtelektrischen Winkelmeßeinrichtung der genannten Gattung die Abtasteinheit so auszubilden, daß einwandfreie Meßwerte erzielt werden.

Diese Aufgabe wird erfindungsgemäß durch die kennzeichnenden Merkmale des Anspruchs 1 oder 2 gelöst.

Die mit der Erfindung erzielten Vorteile bestehen insbesondere darin, daß durch das Vorsehen eines optischen Elements für den Lichtstrahlengang in der Abtasteinheit, dessen Brennpunkt bzw. Brennlinie auf der Drehachse des zylinderförmigen Teilungsträgers liegt, auf einfache Weise ohne zusätzliche Elemente einmal Meßungenauigkeiten infolge der Krümmung einer parallelen Winkelteilung auf der Mantelfläche eines Teilungsträgers ausgeschlossen werden. Da der Radius des Teilungsträgers für die Winkelteilung nicht mehr auf möglichst große Werte beschränkt ist, erhöht sich der Anwendungsbereich der vorgeschlagenen Winkelmeßeinrichtung erheblich. Zum anderen werden Meßungenauigkeiten bei einer radialen Winkelteilung auf einer Oberfläche eines scheibenförmigen Teilungsträgers vermieden, die mittels einer radialen Abtastteilung abgetastet wird, da keine gegenseitige Abschattung zwischen der radialen Winkelteilung und der radialen Abtastteilung auftritt.

Vorteilhafte Ausbildungen der Erfindung entnimmt man den abhängigen Patentansprüchen.

Ausführungsbeispiele der Erfindung werden anhand der Zeichnung näher erläutert.

Es zeigen

Figur 1    eine erste lichtelektrische Winkelmeßeinrichtung in einer Draufsicht und
Figur 2    in einer Seitenansicht ;
Figur 3    eine zweite lichtelektrische Winkelmeßeinrichtung in einer Draufsicht und
Figur 4    in einer Seitenansicht ;
Figur 5    eine Gegenüberstellung zweier Lichtstrahlengänge ;
Figur 6    eine dritte lichtelektrische Winkelmeßeinrichtung in einer Seitenansicht und
Figur 7    in einer Draufsicht ;
Figur 8    eine vierte lichtelektrische Winkelmeßeinrichtung in einer Seitenansicht und
Figur 9    in einer Draufsicht.

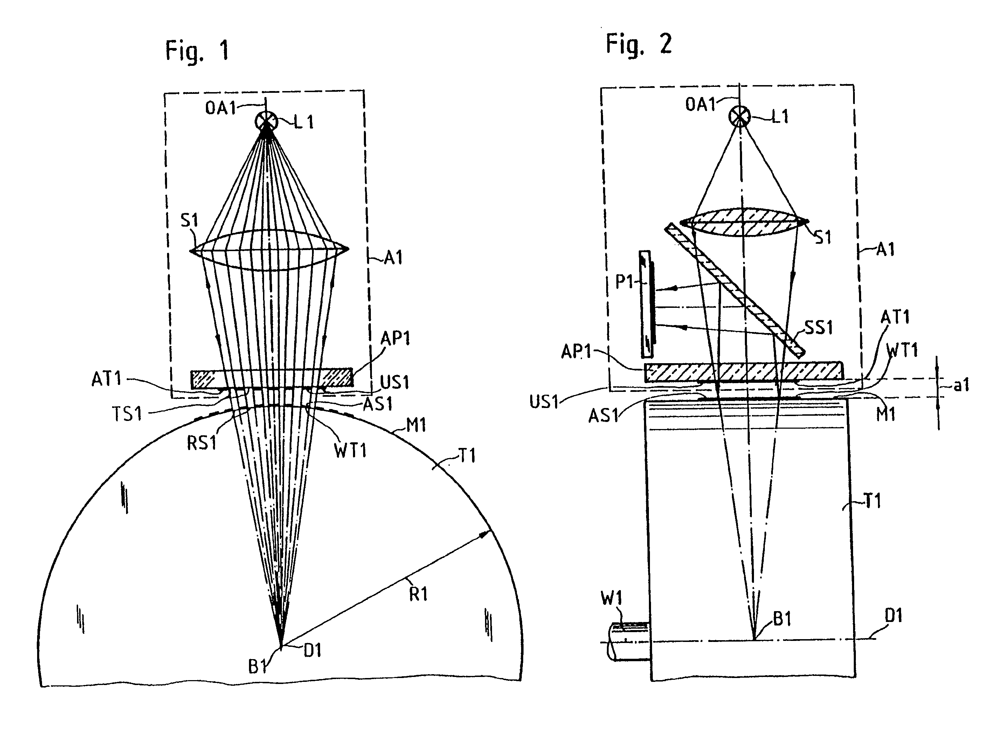

In Figur 1 ist schematisch eine erste lichtelektrische Winkelmeßeinrichtung in einer Draufsicht und in Figur 2 in einer Seitenansicht dargestellt. Ein um eine Drehachse D1 drehbar gelagerter zylinderförmiger Teilungsträger T1 ist mit seiner Welle W1 mit einem nicht gezeigten drehbaren Objekt verbunden. Auf der Mantelfläche M1 des zylinderförmigen Teilungsträgers T1 ist eine Winkelteilung WT1 aufgebracht, die aus parallel zur Drehachse D1 des Teilungsträgers T1 verlaufenden reflektierenden Teilungsstrichen RS1 und absorbierenden Teilungsstrichen AS1 gleicher Breite besteht, die alternierend aufeinander folgen.

Diese Winkelteilung WT1 wird von einer mit einem nicht gezeigten feststehenden Objekt verbundenen Abtasteinheit A1 im Auflicht abgetastet, die eine Lichtquelle L1, ein optisches Element S1 in Form einer Sammellinse, einen Teilerspiegel SS1, eine ebene Abtastplatte AP1 mit einer Abtastteilung AT1 sowie ein Photoelement P1 aufweist ; die Abtastteilung AT1 besteht aus parallel zu Drehachse D1 des Teilungsträgers T1 verlaufenden transparenten Teilungsstrichen TS1 und lichtundurchlässigen Teilungsstrichen US1 gleicher Breite, die alternierend aufeinander folgen. Die beiden Objekte können durch eine Spindel und das Bett einer nicht gezeigten Bearbeitungsmaschine gebildet sein.

Die von der Lichtquelle L1 ausgehenden Lichtstrahlen durchsetzen die Sammellinse S1, den Teilerspiegel SS1 sowie die Abtastteilung AT1 der ebenen Abtastplatte AP1, werden von der Winkelteilung WT1 des Teilungsträgers T1 durch die Abtastteilung AT1 hindurch auf den Teilerspiegel SS1 reflektiert und fallen sodann nach der Umlenkung durch den Teilerspiegel SS1 auf das Photoelement P1. Die ebene Abtastplatte AP1 ist senkrecht zur optischen Achse OA1 des Strahlengangs und parallel zu der die optische Achse OA1 senkrecht schneidenden Mantellinie der Mantelfläche M1 in einem bestimmten Abstand a1 angeordnet, der sich nach Maßgabe einer optimalen Abtastung bestimmt.

Da erfindungsgemäß der Brennpunkt B1 des optischen Elements S1 auf der Drehachse D1 des Teilungsträgers T1 liegt, fallen gemäß Figur 1 alle Lichtstrahlen im konvergenten Strahlengang radial bezüglich der Drehachse D1 des Teilungsträgers T1 auf die Winkelteilung WT1 und werden von der Winkelteilung WT1 in sich selbst reflektiert, so daß keine nachteilige Beeinflussung der Signalgüte des vom Photoelement P1 erzeugten periodischen Abtastsignals mehr auftritt und somit die aus dem periodischen Abtastsignal in bekannter Weise gewonnenen Meßwerte für die relative Winkellage der beiden Objekte keine Meßungenauigkeiten aufweisen.

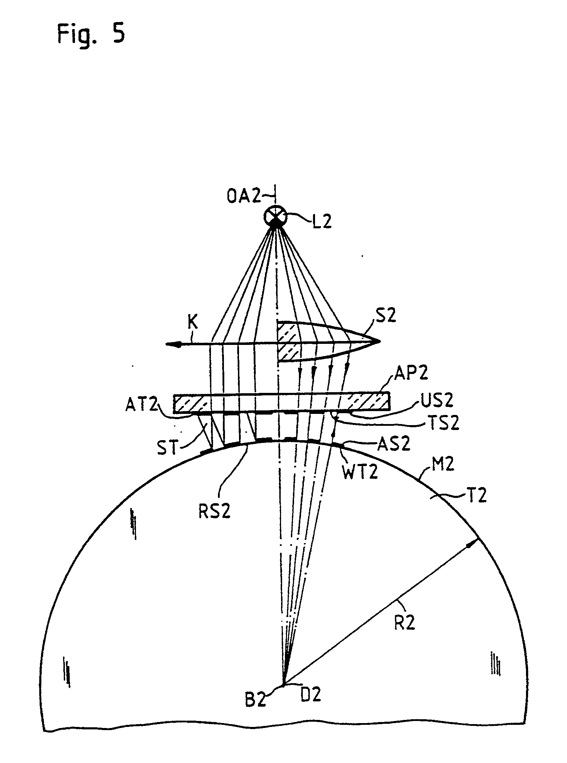

Die Krümmung der Mantelfläche M1 bzw. der Radius R1 des Teilungsträgers T1 können ohne nachteilige Folgen beliebig entsprechend dem jeweiligen Anwendungszweck gewählt werden. Wie nachfolgend anhand der Figur 5 noch erläutert wird, kann die volle Länge der Abtastteilung AT1 der Abtastplatte AP1 zur Abtastung der Winkelteilung WT1 des Teilungsträgers T1 genutzt werden. Die Gitterkonstante der Abtastteilung AT1 wird zur Gitterkonstanten der Winkelteilung WT1 wegen des radialen Strahlenverlaufs im Verhältnis R1 + a1 zu R1 gewählt.

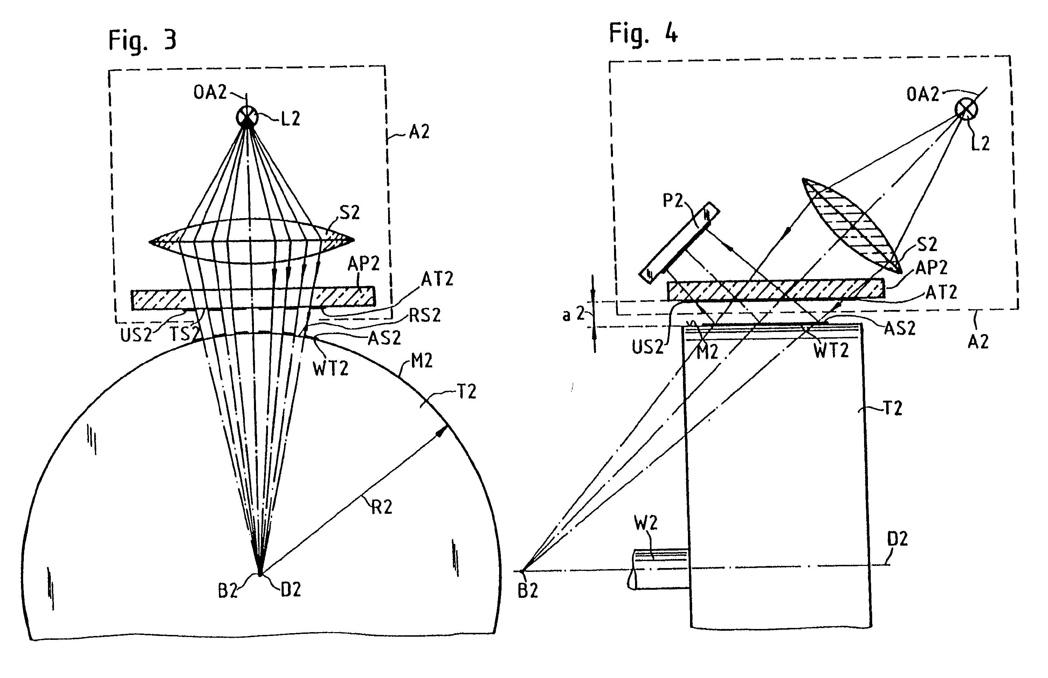

In Figur 3 ist schematisch eine zweite lichtelektrische Winkelmeßeinrichtung in einer Draufsicht und in Figur 4 in einer Seitenansicht dargestellt. Ein um eine Drehachse D2 drehbar gelagerter zylinderförmiger Teilungsträger T2 ist mit seiner Welle W2 mit einem nicht gezeigten drehbaren Objekt verbunden. Auf der Mantelfläche M2 des zylinderförmigen Teilungsträgers T2 ist eine Winkelteilung WT2 aufgebracht, die aus parallel zur Drehachse D2 des Teilungsträgers T2 verlaufenden reflektierenden Teilungsstrichen RS2 und absorbierenden Teilungsstrichen AS2 gleicher Breite besteht, die alternierend aufeinander folgen.

Diese Winkelteilung WT2 wird von einer mit einem nicht gezeigten feststehenden Objekt verbundenen Abtasteinheit A2 im Auflicht abgetastet, die eine Lichtquelle L2, ein optisches Element S2 in Form einer Sammellinse, eine ebene Abtastplatte AP2 mit einer Abtastteilung AT2 sowie ein Photoelement P2 aufweist ; die Abtastteilung AT2 besteht aus parallel zur Drehachse D2 des Teilungsträgers T2 verlaufenden transparenten Teilungsstrichen TS2 und lichtundurchlässigen Teilungsstrichen US2 gleicher Breite, die alternierend aufeinander folgen. Die beiden Objekte können durch eine Spindel und das Bett einer nicht gezeigten Bearbeitungsmaschine gebildet sein.

Die von der Lichtquelle L2 im schräg zur Drehachse D2 des Teilungsträgers T2 verlaufenden Strahlengang ausgehenden Lichtstrahlen durchsetzen die Sammellinse S2 und die Abtastteilung AT2 der ebenen Abtastplatte AP2 und werden von der Winkelteilung WT2 des Teilungsträgers T2 durch die Abtastteilung AT2 hindurch auf das Photoelement P2 reflektiert. Die ebene Abtastplatte AP2 ist parallel zu der die optische Achse OA2 schneidenden Mantellinie der Mantel fläche M2 in einem bestimmten Abstand a2 angeordnet, der sich nach Maßgabe einer optimalen Abtastung bestimmt.

Da erfindungsgemäß der Brennpunkt B2 des optischen Elements S2 auf der Drehachse D2 des Teilungsträgers T2 liegt, fallen gemäß Figur 3 alle Lichtstrahlen im konvergenten Strahlengang radial bezüglich der Drehachse D2 des Teilungsträgers T2 auf die Winkelteilung WT2 und werden von der Winkelteilung WT2 in sich selbst reflektiert, so daß keine nachteilige Beeinflussung der Signalgüte des vom Photoelement P2 erzeugten periodischen Abtastsignals mehr auftritt und somit die aus dem periodischen Abtastsignal in bekannter Weise gewonnenen Meßwerte für die relative Winkellage der beiden Objekte keine Meßungenauigkeiten aufweisen.

In Figur 5 ist auf der rechten Hälfte die rechte Hälfte der Figur 3 dargestellt ; auf der linken Hälfte der Figur 5 ist der Stand der Technik gezeigt. Bei diesem Stand der Technik werden die von der Lichtquelle L2 ausgehenden Lichtstrahlen von einem Kondensor K parallel gerichtet, durchsetzen die Abtastteilung AT2 der ebenen Abtastplatte AP2 und werden von der Winkelteilung WT2 auf der Mantelfläche M2 durch die Abtastteilung AT2 hindurch auf das Photoelement reflektiert. Wegen der Krümmung der Mantelfläche M2 des zylinderförmigen Teilungsträgers T2 treffen die parallel zur optischen Achse OA2 verlaufenden Lichtstrahlen zu beiden Seiten der optischen Achse OA2 in der Zeichenebene nicht senkrecht auf der Winkelteilung WT2 auf und werden daher unter entsprechenden Reflexionswinkeln in der Zeichenebene auf die Abtastteilung AT2 reflektiert. Auf der linken Hälfte der Figur 5 fallen an der Stelle ST die vom reflektierenden Teilungsstrich RS2 der Winkelteilung WT2 reflektierten Lichtstrahlen auf den lichtundurchlässigen Teilungsstrich US2 der Abtastteilung AT2, so daß der reflektierende Teilungsstrich RS2 der Winkelteilung WT2 durch den lichtundurchlässigen Teilungsstrich US2 der Abtastteilung AT2 eine Abschattung erfährt ; eine solche Abschattung tritt auf der rechten Seite der Figur 5 wegen des erfindungsgemäßen Strahlengangs mit radial bezüglich der Drehachse D2 des Teilungsträgers T2 verlaufenden Lichtstrahlen nicht auf. Somit kann im Gegensatz zum Stand der Technik bei der Erfindung die volle Länge der Abtastteilung AT2 der Abtastplatte AP2 zur Abtastung der Winkelteilung WT2 des Teilungsträgers T2 genutzt werden. Die Krümmung der Mantelfläche M2 bzw. der Radius R2 des Teilungsträgers T2 können ohne nachteilige Folgen auf die Meßgenauigkeit beliebig entsprechend dem jeweiligen Anwendungszweck gewählt werden. Die Gitterkonstante der Abtastteilung AT2 wird zur Gitterkonstanten der Winkelteilung WT2 wegen des radialen Strahlenverlaufs im Verhältnis R2 + a2 zu R2 gewählt.

Weist das optische Element S statt eines Brennpunktes B eine Brennlinie auf, so muß in nicht gezeigter Weise erfindungsgemäß die Brennlinie mit der Drehachse D des Teilungsträgers T zusammenfallen.

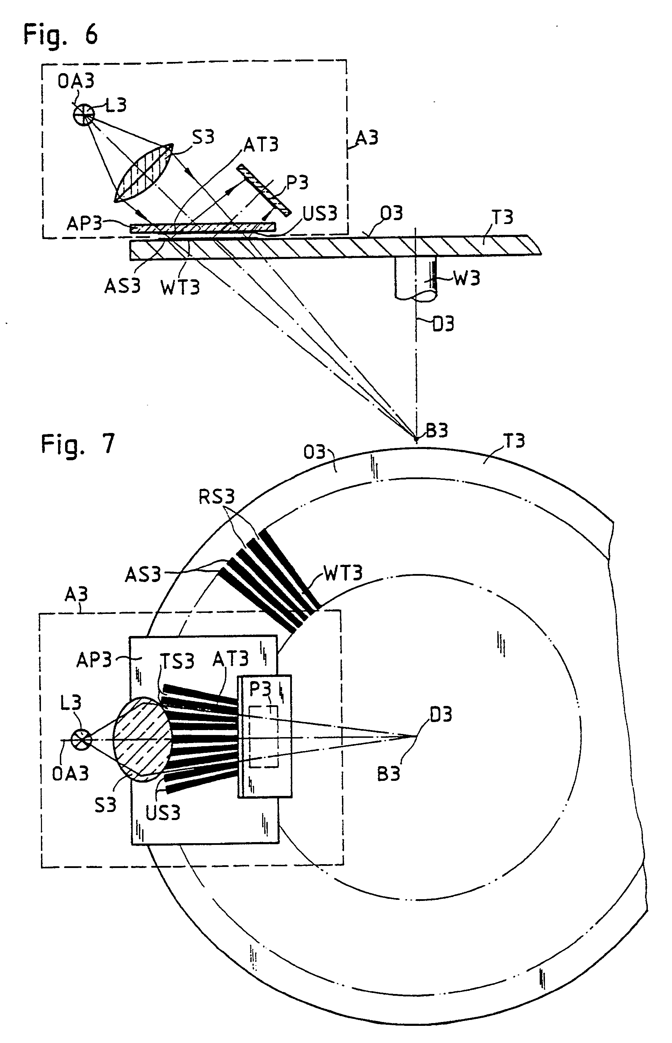

In Figur 6 ist schematisch eine dritte lichtelektrische Winkelmeßeinrichtung in einer Seitenansicht und in Figur 7 in einer Draufsicht dargestellt. Ein um eine Drehachse D3 drehbar gelagerter Teilungsträger T3 in Form einer Teilscheibe ist mit seiner Welle W3 mit einem nicht gezeigten drehbaren Objekt verbunden. Auf einer ebenen Oberfläche O3 der Teilscheibe T3 ist an der Peripherie eine Winkelteilung WT3 aufgebracht, die aus radial zur Drehachse D3 der Teilscheibe T3 verlaufenden reflektierenden Teilungsstrichen RS3 und absorbierenden Teilungsstrichen AS3 gleicher Breite besteht, die alternierend aufeinander folgen.

Die radiale Winkelteilung WT3 wird von einer mit einem nicht gezeigten feststehenden Objekt verbundenen Abtasteinheit A3 im Auflicht abgetastet, die eine Lichtquelle L3, ein optisches Element S3 in Form einer Sammellinse, eine ebene Abtastplatte AP3 mit einer Abtastteilung AT3 sowie ein Photoelement P3 aufweist ; die Abtastteilung AT3 besteht aus radial zur Drehachse D3 der Teilscheibe T3 verlaufenden transparenten Teilungsstrichen TS3 und lichtundurchlässigen Teilungsstrichen US3 gleicher Breite, die alternierend aufeinander folgen. Die beiden Objekte können durch eine Spindel und das Bett einer nicht gezeigten Bearbeitungsmaschine gebildet sein.

4

Die von der Lichtquelle L3 im schräg zur Oberfläche O3 der Teilscheibe T3 in Richtung der Drehachse D3 verlaufenden Strahlengang ausgehenden Lichtstrahlen durchsetzen die Sammellinie S3 und die Abtastteilung AT3 der ebenen Abtastplatte AP3 und werden von der Winkelteilung WT3 der Teilscheibe T3 durch die Abtastteilung AT3 hindurch auf das Photoelement P3 reflektiert. Die ebene Abtastplatte AP3 ist parallel zur ebenen Oberfläche O3 der Teilscheibe T3 in einem bestimmten Abstand angeordnet, der sich nach Maßgabe einer optimalen Abtastung bestimmt.

Da erfindungsgemäß der Brennpunkt B3 des optisch abbildenden Elements S3 auf der Drehachse D3 der Teilscheibe T3 liegt, fallen gemäß Figur 7 alle Lichtstrahlen im konvergenten Strahlengang mit der optischen Achse OA3 in radialen Ebenen durch die Drehachse D3 und senkrecht zur Oberfläche O3 der Teilscheibe T3 auf die radiale Winkelteilung WT3 und werden von der radialen Winkelteilung WT3 in diesen Ebenen reflektiert, so daß die radiale Winkelteilung WT3 koinzident auf die radiale Abtastteilung AT3 abgebildet wird und keine nachteilige Beeinflussung der Signalgüte des vom Photoelement P3 erzeugten periodischen Abtastsignals auftritt und somit die aus dem periodischen Abtastsignal in bekannter Weise gewonnenen Meßwerte für die relative Winkellage der beiden Objekte keine Meßungenauigkeiten aufweisen.

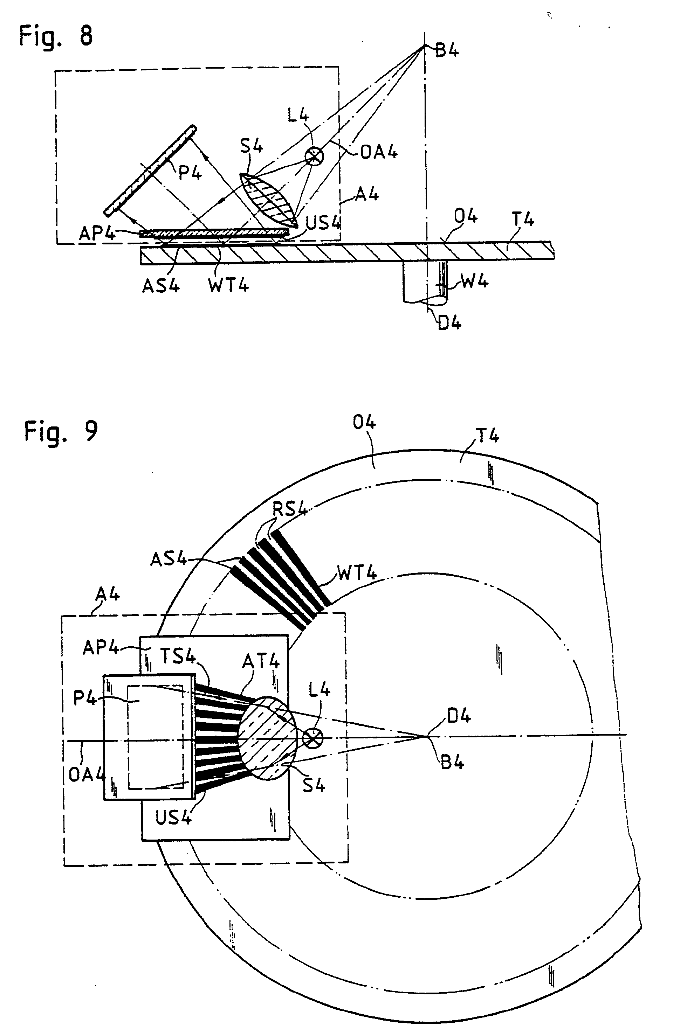

In Figur 8 ist schematisch eine vierte lichtelektrische Winkelmeßeinrichtung in einer Seitenansicht und in Figur 9 in einer Draufsicht dargestellt. Ein um eine Drehachse D4 drehbar gelagerter Teilungsträger T4 in Form einer Teilscheibe ist mit seiner Welle W4 mit einem nicht gezeigten drehbaren Objekt verbunden. Auf einer ebenen Oberfläche O4 der Teilscheibe T4 ist an der Peripherie eine Winkelteilung WT4 aufgebracht, die aus radial zur Drehachse D4 der Teilscheibe T4 verlaufenden reflektierenden Teilungsstrichen RS4 und absorbierenden Teilungsstrichen AS4 gleicher Breite besteht, die alternierend aufeinander folgen.

Die radiale Winkelteilung WT4 wird von einer mit einem nicht gezeigten feststehenden Objekt verbundenen Abtasteinheit A4 im Auflicht abgetastet, die eine Lichtquelle L4, ein optisches Element S4 in Form einer Sammellinse, eine ebene Abtastplatte AP4 mit einer Abtastteilung AT4 sowie ein Photoelement P4 aufweist; die Abtastteilung AT4 besteht aus radial zur Drehachse D4 der Teilscheibe T4 verlaufenden transparenten Teilungsstrichen TS4 und lichtundurchlässigen Teilungsstrichen US4 gleicher Breite, die alternierend aufeinander folgen. Die beiden Objekte können durch eine Spindel und das Bett einer nicht gezeigten Bearbeitungsmaschine gebildet sein.

Die von der Lichtquelle L4 im schräg zur Oberfläche O4 der Teilscheibe T4 von der Drehachse D4 fort verlaufenden Strahlengang ausgehenden Lichtstrahlen durchsetzen die Sammellinse S4 und die Abtastteilung AT4 der ebenen Abtastplatte AP4 und werden von der Winkelteilung WT4 der Teilscheibe T4 durch die Abtastteilung AT4 hindurch auf das Photoelement P4 reflektiert. Die ebene Abtastplatte AP4 ist parallel zur ebenen Oberfläche O4 der Teilscheibe T4 in einem bestimmten Abstand angeordnet, der sich nach Maßgabe einer optimalen Abtastung bestimmt.

Da erfindungsgemäß der Brennpunkt B4 des optisch abbildenen Elements S4 auf der Drehachse D4 der Teilscheibe T4 liegt, fallen gemäß Figur 9 alle Lichtstrahlen im konvergenten Strahlengang mit der optischen Achse OA4 in radialen Ebenen durch die Drehachse D4 und senkrecht zur Oberfläche O4 der Teilscheibe T4 auf die radiale Winkelteilung WT4 und werden von der radialen Winkelteilung WT4 in diesen Ebenen reflektiert, so daß die radiale Winkelteilung WT4 koinzident auf die radiale Abtastteilung AT4 abgebildet wird und keine nachteilige Beeinflussung der Signalgüte des vom Photoelement P4 erzeugten periodischen Abtastsignals auftritt und somit die aus dem periodischen Abtastsignal in bekannter Weise gewonnenen Meßwerte für die relative Winkellage der beiden Objekte keine Meßungenauigkeiten aufweisen.

Die korrespondierenden Teilungsstriche RS, AS, TS, US der Winkelteilung WT und der Abtastteilung AT verlaufen parallel zueinander.

Die Erfindung ist neben den oben beschriebenen inkrementalen Winkelmeßeinrichtungen auch bei absoluten Winkelmeßeinrichtungen mit Erfolg einsetzbar. Dergleichen ist die Erfindung sowohl im Auflicht als auch im Durchlicht und ferner auch beim sogenannten Auflicht-Durchlichtverfahren erfolgreich anwendbar.

## Patentansprüche

1. Lichtelektrische Winkelmeßeinrichtung zur Messung der relativen Winkellage zweier zueinander drehbarer Objekte im Auflicht, bei der eine mit dem einen Objekt verbundene Abtasteinheit mit einer Abtastteilung die Winkelteilung eines mit dem anderen Objekt verbundenen Teilungsträgers abtastet und bei der die korrespondierenden Teilungsstriche der Abtastteilung und der Winkelteilung parallel zueinander verlaufen, gekennzeichnet durch folgende Merkmale :

a) die Abtasteinheit (A1 ; A2) weist für den Lichtstrahlengang ein optisch abbildendes Element (S1 ; S2) auf, so daß die Lichtstrahlen des Lichtstrahlenganges sich auf der Drehachse (D1 ; D2) des Teilungsträgers (T1 ; T2) schneiden ;

b)    die Winkelteilung (WT1 ; WT2) besteht aus parallelen Teilungsstrichen (RS1, AS1 ; RS2, AS2) auf der Mantelfläche (M1 ; M2) des zylinderförmigen Teilungsträgers (T1 ; T2) und die Abtastteilung (AT1 ; AT2) besteht aus parallelen Teilungsstrichen (TS1, US1 ; TS2, US2) auf einer ebenen Abtastplatte (AP1 ; AP2) parallel zur Drehachse (D1 ; D2) des Teilungsträgers (T1 ; T2) ;

c)    die Abtasteinheit (A1 ; A2) weist eine Lichtquelle (L1 ; L2), das optische Element (S1 ; S2), die ebene Abtastplatte (AP1 ; AP2) mit der Abtastteilung (AT1 ; AT2) sowie wenigstens ein Photoelement (P1 ; P2) auf.

2. Lichtelektrische Winkelmeßeinrichtung zur Messung der relativen Winkellage zweier zueinander drehbarer Objekte im Auflicht, bei der eine mit dem einen Objekt verbundene Abtasteinheit mit einer Abtastteilung die Winkelteilung eines mit dem anderen Objekt verbundenen Teilungsträgers abtastet und bei der die korrespondierenden Teilungsstriche der Abtastteilung und der Winkelteilung parallel zueinander verlaufen, gekennzeichnet durch folgende Merkmale :

a)    die Abtasteinheit (A3 ; A4) weist für den Lichtstrahlengang ein optisch abbildendes Element (S3 ; S4) auf, so daß die Lichtstrahlen des Lichtstrahlenganges sich auf der Drehachse (D3 ; D4) des Teilungsträgers (T3 ; T4) schneiden ;

b)    die Winkelteilung (WT3 ; WT4) besteht aus radialen Teilungsstrichen (RS3, AS3 ; RS4, AS4) auf der ebenen Oberfläche (O3 ; O4) des scheibenförmigen Teilungsträgers (T3 ; T4) und die Abtastteilung (AT3 ; AT4) besteht aus radialen Teilungsstrichen (TS3, US3 ; TS4, US4) auf einer ebenen Abtastplatte (AP3 ; AP4) bezüglich der Drehachse (D3 ; D4) des Teilungsträgers (T3 ; T4) ;

c)    die Abtasteinheit (A3 ; A4) weist eine Lichtquelle (L3 ; L4), das optische Element (S3 ; S4), die ebene Abtastplatte (AP3 ; AP4) mit der Abtastteilung (AT3 ; AT4) sowie wenigstens ein Photoelement (P3 ; P4) auf.

3. Winkelmeßeinrichtung nach Anspruch 1, dadurch gekennzeichnet, daß die Abtasteinheit (A1) für einen Lichtstrahlengang mit senkrecht zur Drehachse (D1) des Teilungsträgers (T1) verlaufender optischer Achse (OA1) zusätzlich einen Teilerspiegel (SS1) aufweist.

4. Winkelmeßeinrichtung nach Anspruch 1, dadurch gekennzeichnet, daß die Gitterkonstante der Abtastteilung (AT1 ; AT2) und die Gitterkonstante der Winkelteilung (WT1 ; WT2) proportional ihrem jeweiligen Abstand (R1 + a1, R1 ; R2 + a2, R2) von der Drehachse (D1 ; D2) des Teilungsträgers (T1 ; T2) sind.

## Claims

1. Photoelectric angle measuring device for measuring with reflected light the relative position of two objects rotatable relative to one another, in which a sensing unit with a sensing graduation connected to one object senses the angular graduation of a graduation carrier connected to the other object and in which the corresponding graduation lines of the sensing graduation and of the angular graduation run parallel to one another, characterized by the following features :

a)    the sensing unit (A1 ; A2) comprises an optical imaging element (S1 ; S2) for the light beam path such that the light rays of the light beam path intersect on the axis of rotation (D1 ; D2) of the graduation carrier (T1 ; T2) ;

b)    the angular graduation (WT1 ; WT2) consists of parallel graduation lines (RS1, AS1 ; RS2, AS2) on the peripheral surface (M1 ; M2) of the cylindrically formed graduation carrier (T1 ; T2) and the sensing graduation (AT1 ; AT2) consists of parallel graduation lines (TS1, US1 ; TS2, US2) on a flat sensing plate (AP1 ; AP2) parallel to the axis of rotation (D1 ; D2) of the graduation carrier (T1 ; T2) ;

c)    the sensing unit (A1 ; A2) comprises a light source (L1 ; L2), the optical element (S1 ; S2), the flat sensing plate (AP1 ; AP2) with the sensing graduation (AT1 ; AT2) as well as at least one photo-element (P1 ; P2).

2. Photoelectric angle measuring device for measuring with reflected light the relative position of two objects rotatable relative to one another, in which a sensing unit with a sensing graduation connected to one object senses the angular graduation of a graduation carrier connected to the other object and in which the corresponding graduation lines of the sensing graduation and of the angular graduation run parallel to one another, characterized by the following features :

a) the sensing unit (A3 ; A4) comprises an optical imaging element (S3 ; S4) for the light beam path such that the light rays of the light beam path intersect on the axis of rotation (D3 ; D4) of the graduation carrier (T3 ; T4) ;

b) the angular graduation (WT3 ; WT4) consists of radial graduation lines (RS3, AS3 ; RS4, AS4) on the flat surface (O3 ; O4) of the disc formed graduation carrier (T3 ; T4) and the sensing graduation (AT3 ; AT4) consists of graduation lines (TS3, US3 ; TS4, US4) on a flat sensing plate (AP3 ; AP4) radial relative to the axis of rotation (D3 ; D4) of the graduation carrier (T3 ; T4) ;

c) the sensing unit (A3 ; A4) comprises a light source (L3 ; L4), the optical element (S3 ; S4), the flat sensing plate (AP3 ; AP4) with the sensing graduation (AT3 ; AT4) as well as at least one photo-element (P3 ; P4).

3. Angular measuring device according to claim 1, characterized in that the sensing unit (A1) additionally comprises a beam-splitting mirror (SS1) for a light beam path with an optical axis (OA1) running perpendicular to the axis of rotation (D1) of the graduation carrier (T1).

4. Angular measuring device according to claim 1, characterized in that the grating constant of the sensing graduation (AT1 ; AT2) and the grating constant of the angular graduation (WT1 ; WT2) are proportional to their respective distances (R1 + a1, R1 ; R2 + a2, R2) from the axis of rotation (D1 ; D2) of the graduation carrier (T1 ; T2).

**Revendications**

1. Dispositif de mesure d'angle photo-électrique pour la mesure en lumière reflété de la position angulaire relative de deux objets pouvant tourner l'un par rapport à l'autre, dans lequel une unité de lecture munie d'une graduation de lecture, liée à l'un des objets, lit la graduation angulaire d'un support de graduation lié à l'autre objet, et dans lequel les repères de graduation correspondants de la graduation de lecture et de la graduation angulaire sont parallèles entre eux, **caractérisé** par les caractéristiques suivantes :

a) l'unité de lecture (A1 ; A2) comporte pour le faisceaux de rayons lumineux un élément de reproduction optique (S1 ; S2) tel que les rayons lumineux du faisceau de rayons lumineux se coupent sur l'axe de rotation (D1 ; D2) du support de graduation (T1 ; T2) ;

b) la graduation angulaire (WT1 ; WT2) se compose de repères de graduation (RS1, AS1 ; RS2, AS2) parallèles sur la surface enveloppe (M1 ; M2) du support de graduation (T1 ; T2) cylindrique et la graduation de lecture (AT1 ; AT2) se compose de repères de graduation (TS1, US1 ; TS2, US2) parallèles sur une plaque de lecture (AP1 ; AP2) plane parallèle à l'axe de rotation (D1 ; D2) du support de graduation (T1 ; T2) ;

c) l'unité de lecture (A1 ; A2) comporte une source lumineuse (L1 ; L2), l'élément optique (S1 ; S2), la plaque de lecture (AP1 ; AP2) plane munie de la graduation de lecture (AT1 ; AT2) ainsi qu'au moins une cellule photo-électrique (P1 ; P2).

2. Dispositif de mesure d'angle photo-électrique pour la mesure en lumière reflété de la position angulaire relative de deux objets pouvant tourner l'un par rapport à l'autre, dans lequel une unité de lecture munie d'une graduation de lecture, reliée à l'un des objets, lit la graduation angulaire d'un support de graduation relié à l'autre objet, et dans lequel les repères de graduation correspondants de la graduation de lecture et de la graduation angulaire sont parallèles entre eux, caractérisé par les caractéristiques suivantes :

a) l'unité de lecture (A3 ; A4) comporte un élément optique de reproduction (S3 ; S4) pour le faisceau de rayons lumineux, tel que les rayons lumineux du faisceau de rayons lumineux se coupent sur l'axe de rotation (D3 ; D4) du support de graduation (T3 ; T4) ;

b) la graduation angulaire (WT3 ; WT4) se compose de repères de graduation radiaux (RS3, AS3 ; RS4, AS4) sur la surface (O3 ; O4) plane du support de graduation (T3 ; T4) de disque et la graduation de lecture (AT3 ; AT4) se compose de repères de graduation radiaux (TS3, US3 ; TS4, US4) sur une plaque de lecture plane (AP3 ; AP4) par rapport à l'axe de rotation (D3 ; D4) du support de graduation (T3 ; T4) ;

c) l'unité de lecture (A3 ; A4) comporte une source lumineuse (L3 ; L4), l'élément optique (S3 ; S4), la plaque de lecture (AP3 ; AP4) plane munie de la graduation de lecture (AT3 ; AT4) ainsi qu'au moins une cellule photo-électrique (P3 ; P4).

7

3. Dispositif de mesure d'angle selon la revendication 1, **caractérisé** en ce que l'unité de lecture (AI) comporte un miroir séparateur (SS1) supplémentaire pour un faisceau de rayons lumineux dont l'axe optique (OA1) est perpendiculaire à l'axe de rotation (D1) du support de graduation (T1).

4. Dispositif de mesure d'angle selon la revendication 1, **caractérisé** en ce que la constante de réseau de la graduation de lecture (AT1 ; AT2) et la constante de réseau de la graduation angulaire (WT1 ; WT2) sont proportionnelles à leurs distances respectives (R1 + a1, R1 ; R2 + a2, R2) par rapport à l'axe de rotation (D1 ; D2) du support de graduation (T1 ; T2).

Fig. 2

Fig. 1

## Fig. 3

## Fig. 4

EP 0 345 414 B1

# Fig. 5

# Fig. 6

# Fig. 7

**Fig. 8**

**Fig. 9**